# EUROPEAN PATENT SPECIFICATION

(11) **EP 3 161 115 B1**
(45) Date of publication and mention of the grant of the patent: **20.02.2019**
(21) Application number: 15729527.0
(22) Date of filing: 22.06.2015
(51) Int. Cl.: C11D 3/37

(54) **DISHWASHER DETERGENT COMPRISING PHOSPHATE-CONTAINING POLYMERS**
REINIGUNGSMITTEL FÜR GESCHIRRSPÜLER MIT PHOSPHATHALTIGEN POLYMEREN
DÉTERGENT POUR LAVE-VAISSELLE COMPRENANT DES POLYMÈRES CONTENANT DU PHOSPHATE

(30) Priority: 27.06.2014 EP 14174782
(43) Date of publication of application: 03.05.2017
(73) Proprietor: Henkel AG & Co. KGaA, 40589 Düsseldorf (DE); Rhodia Operations, 93306 Aubervilliers (FR)
(72) Inventor: VOCKENROTH, Inga Kerstin, 40597 Düsseldorf (DE); MUSSMANN, Nina, 47877 Willich (DE); WRUBBEL, Noelle, 40591 Düsseldorf (DE); BASTIGKEIT, Thorsten, 42279 Wuppertal (DE); EITING, Thomas, 40589 Düsseldorf (DE); GONZALEZ, Inigo, F-60300 Mont L'Eveque (FR); ORIZET, Céline, F-92340 Bourg la Reine (FR)
(86) International application number: PCT/EP2015/063941
(87) International publication number: WO 2015/197533

(56) References cited:
- EP-A2- 0 161 596
- WO-A1-2010/076165
- DE-A1- 4 330 699
- US-A- 5 264 143
- US-A1- 2002 187 916
- US-A1- 2009 048 142
- US-A1- 2013 206 181
- US-A1- 2014 121 150
- US-B1- 6 326 343
- US-B1- 6 489 287

## Description

The present invention generally relates to detergents, and more particularly relates to automatic dishwashing agents, automatic dishwashing methods using these dishwashing agents and the use of these dishwashing agents to improve cleaning performance in automatic dishwashing. Commonly used automatic dishwashing agents typically contain phosphorus-containing ingredients, in particular phosphates and/or phosphonates that are used as builders in said agents.

Although phosphates are very valuable ingredients with regard to the performance benefits seen in automatic dishwashing agents, their use is undesirable from an environmental standpoint. This is due to the fact that significant amounts of phosphate enter natural bodies of water via the household wastewater and lead to eutrophication of standing bodies of water (lakes, ponds). As a result, the use of phosphates in automatic dishwashing agents will be banned in Europe from 2017 onwards.

Although a number of substitutes are discussed in the literature as alternatives to alkali metal phosphates in automatic dishwashing agents, including citrates and/or methyl glycine diacetic acid (MGDA), the manufacturers of automatic dishwashing agents have not yet succeeded in providing phosphate-free automatic dishwashing agents that are superior or even comparable to the phosphate-containing cleaning agents with regard to their cleaning, clear rinse performance and scale-inhibiting performance. Equality in performance is a prerequisite for successful market introduction of phosphate-free cleaning agents. By far the majority of end consumers will always decide against an ecologically advantageous product despite broad public discussion if this product does not meet the market standard with regard to its price and/or performance.

WO 2010/076165 A1 relates to a phosphate and bleach-free automatic dishwashing detergent composition comprising citrate and a phosphonate group-containing polymer.

US 6,489,287 B1 relates to a detergent formulation useful as machine dish washing detergent formulation comprising a phosphonate group-containing polymer.

US 2014/0121150 A1 relates to a detergent composition suitable for use for the prevention of hard water scale accumulation on surfaces such as plastics, metal and/or glasses, the composition comprising an alkali metal hydroxide, a non-ionic surfactant, and a phosphinate or phosphonate group-containing polymer.

US 2013/0206181 A1 relates to an automatic dishwashing composition comprising a hypophosphite group-containing polymer, the composition being substantially free of phosphate containing builders and substantially free of bleaching compounds.

Accordingly, it is an object of the present invention to provide automatic dishwashing agents, preferably phosphate-free, that exhibit excellent performance in comparison with traditional phosphate-free automatic dishwashing agents with regard to cleaning performance and in particular scale inhibition. Furthermore, other desirable features and characteristics of the present invention will become apparent from the subsequent detailed description of the invention and the appended claims, taken in conjunction with the accompanying drawings and this background of the invention.

It has now been surprisingly found that an automatic dishwashing agent, preferably a phosphate-free automatic dishwashing agent, comprising a phosphate group-containing polymer, optionally in combination with commonly used sulfopolymers, results in excellent performance in comparison with traditional phosphate-free automatic dishwashing agents, especially with regard to the prevention of scale formation.

In a first aspect, the present invention thus relates to an automatic dishwashing agent, preferably a phosphate-free automatic dishwashing agent, comprising 1 to 20 wt %, preferably 2 to 15 wt %, of a phosphate group-containing polymer based on the total weight of the agent.

In another aspect, the present invention is directed to a method for the cleaning of dishes in an automatic dishwasher, the method comprising dosing the automatic dishwashing agent as described herein into the interior of the automatic dishwasher during a dishwashing program that includes a rinse cycle.

In still another aspect, the present invention also encompasses the use of the phosphate group-containing polymers as described herein in an automatic dishwashing agent for improving cleaning performance, preferably preventing scale formation, in automatic dishwashing.

The following detailed description of the invention is merely exemplary in nature and is not intended to limit the invention or the application and uses of the invention. Furthermore, there is no intention to be bound by any theory presented in the preceding background of the invention or the following detailed description of the invention.

The term "phosphate group-containing polymer", as used herein, refers to a polymer having phosphate groups in the polymer chain. The polymer is preferably a copolymer, more preferably a linear random copolymer. Typically, the macromolecular chain of the copolymer is a polyethylenic chain (originating from the unsaturations of the monomers), with side phosphate groups.

In various embodiments of the invention, the phosphate group-containing polymer is a copolymer comprising at least:
(1) units (a) derived from acrylic acid;
(2) units (b) derived from an ethylenically unsaturated monomer, such as for example a group derived from one of a methacrylic acid, (meth)acrylamide or vinylbenzene; and
(3) units (c) derived from (i) a precursor monomer unit formed from a phosphate moiety and (ii) an ethylenically unsaturated monomer such as for example a group derived from one of a (meth)acrylic acid, (meth)acrylamide or vinylbenzene.

The phosphate moiety may be a phosphate moiety of formula -R'-O-P(O)(OH)₂ with R' being a hydrocarbyl linking group, for example a -[CH₂]ₙ- group with n ranging from 1 to 5, for example with n being 2.

In the present patent application, unless otherwise indicated, when reference is made to the weight ratio of a monomer unit in a copolymer as described herein, it will relate to the ratio of this monomer unit within the copolymer, expressed in weight %. This can be calculated based on the overall weight amount of each monomer introduced in the reaction mixture during the copolymerization reaction (full conversion).

In various embodiments, the copolymer comprises units (a) derived from acrylic acid.

According to the present invention, the expression "derived from acrylic acid" is intended to cover, for example, a unit obtained by polymerizing a monomer (for example an acrylic acid ester) and by then reacting (for example by hydrolysis) the polymer thus obtained so as to obtain units of formula -CH₂-CH(COOH)-.

In certain embodiments, the copolymer may comprise at least 50% by weight of units (a), based on the total weight of the copolymer. For example, the copolymer may comprise from 50% to 90% by weight of units (a), based on the total weight of the copolymer, for example from 55% to 85% by weight of units (a), for example from 60% to 80% by weight of units (a). In particular, the copolymer may comprise from 70% to 80% by weight of units (a), based on the total weight of the copolymer.

The copolymer further comprises units (b) derived from an ethylenically unsaturated monomer, such as for example a group derived from one of a methacrylic acid, (meth)acrylamide or vinylbenzene. In one specific embodiment, units (b) may be derived from methacrylic acid.

According to the present invention, the expression "derived from methacrylic acid" is intended to cover, for example, a unit obtained by polymerizing a monomer (for example a methacrylic acid ester) and by then reacting (for example by hydrolysis) the polymer thus obtained so as to obtain units of formula -CH₂-C(CH₃)(COOH)-.

In another embodiment, units (b) may be derived from (meth)acrylamide or from vinylbenzene.

In certain embodiments, the copolymer may comprise up to 45% by weight of units (b), based on the total weight of the copolymer. For example, the copolymer may comprise from 5% to 45% by weight of units (b), based on the total weight of the copolymer, for example from 7% to 40% by weight of units (b), for example from 10% to 35% by weight of units (b), for example from 10% to 30% by weight of units (b). In particular, the copolymer may comprise from 10% to 20% by weight of units (b), based on the total weight of the copolymer.

In one embodiment, the copolymer may comprise from 75% to 99% by weight of units (a) and units (b), for example from 80% to 98% by weight, for example from 85 to 95% by weight, relative to the total weight of the copolymer.

According to one embodiment, the phosphate moiety can be a monophosphate compound of formula -R'-O-P(O)(OH)₂ with R' being a hydrocarbyl linking group, for example a -[CH₂]ₙ- group with n ranging from 1 to 5, for example with n being 2.

Often the precursor monomer unit, i.e. the unit comprised of the (meth)acrylic acid, (meth)acrylamide or vinylbenzene covalently bonded to a phosphate moiety may be purchased commercially, but non-commercial precursor monomer units are also contemplated.

According to one embodiment, units (c) may derive from a phosphorous acid monomer of formula CH₂=C(R)-C(O)-O-R'-O-P(O)(OH)₂ where R is H or CH₃, preferably CH₃, and R' is a -[CH₂]ₙ- group with n ranging from 1 to 5, for example with n being 2.

According to a specific embodiment, the polymer according to the invention may be for example a copolymer comprising at least:
(1) units (a) derived from acrylic acid
(2) units (b) derived from an ethylenically unsaturated monomer, such as for example a group derived from methacrylic acid; and
(3) units (c) derived from a phosphorous acid monomer of formula CH₂=C(R)-C(O)-O-R'-O-P(O)(OH)₂ where R is H or CH₃ and R' is a -[CH₂]ₙ- group with n ranging from 1 to 5, for example with n being 2.

Often commercial precursor monomer units are mixtures, such as for example Sipomer PAM-4000 available from Rhodia (Solvay) which is a major part of 2-hydroxyethyl (meth)acrylate monophosphate ester (HEMA) and a minor part bis(2-hydroxyethyl (meth)acrylate) phosphate ester.

In certain embodiments, the copolymer may comprise up to 20% by weight of units (c), based on the total weight of the copolymer. For example, the copolymer may comprise from 1% to 20% by weight of units (c), based on the total weight of the copolymer, for example from 2% to 17% by weight of units (c). In particular, the copolymer may comprise from 3% to 15% by weight of units (c), based on the total weight of the copolymer, for example from 5% to 12% by weight.

The copolymer can comprise optional units (d) which are different from the above-mentioned units (a), (b) and (c). However, the units (a), (b) and (c) represent preferably from 1 to 100% by weight, more preferably from 50 to 100% by weight and most preferably from 75 to 100% by weight of the units of the copolymer.

According to one embodiment, the copolymer may comprise:
(1) at least 50% by weight, based on the total weight of the copolymer, of units (a) derived from acrylic acid;
(2) from 5% to 45% by weight, based on the total weight of the copolymer, of units (b) derived from an ethylenically unsaturated monomer, for example methacrylic acid;
(3) from 5% to 20% by weight, based on the total weight of the copolymer, of units (c) derived from a phosphorous acid monomer of formula CH₂=C(R)-C(O)-O-R'-O-P(O)(OH)₂ where R is H or CH₃ and R' is a -[CH₂]ₙ- group with n ranging from 1 to 5, for example with n being 2; and
(4) optionally other units (d), which are different from units (a), (b) and (c), the total of all the units being equal to 100 wt %.

According to a specific embodiment, the copolymer may comprise:
(1) from 55 to 85 % by weight, based on the total weight of the copolymer, of units (a) derived from acrylic acid;
(2) from 10% to 30% by weight, based on the total weight of the copolymer, of units (b) derived from an ethylenically unsaturated monomer, for example methacrylic acid;
(3) from 5% to 15% by weight, based on the total weight of the copolymer, of units (c) derived from a phosphorous acid monomer of formula CH₂=C(R)-C(O)-O-R'-O-P(O)(OH)₂ where R is H or CH₃ and R' is a -[CH₂]ₙ- group with n ranging from 1 to 5, for example with n being 2; and
(4) optionally other units (d), which are different from units (a), (b) and (c), the total of all the units being equal to 100 wt %.

According to specific embodiments, the copolymer is substantially devoid (it comprises less than 1 mol% thereof, preferably less than 0.5 mol% thereof, preferably does not comprise any at all) of other units, i.e. of units different from units (a), (b) or (c).

In the present patent application, unless otherwise indicated, when reference is made to molar mass, it will relate to the absolute weight-average molar mass, expressed in g/mol. This can be determined by gel permeation chromatography (GPC), with Multi-Angle Laser Light Scattering (MALLS) detection and an aqueous eluent.

In particular, the molar mass of the copolymer may be determined by GPC, with a eluent composed of 85 wt% of water (containing NaCI 100 mM, NaH₂PO₄ 25 mM and Na₂HPO₄ 25 mM) and 15 wt% of methanol, the measure being carried out on a sample containing about 0.5 weight % (calculated as dry polymer) of the copolymer in the above described aqueous eluent (mobile phase).

More especially, the chromatographic conditions and calculations may be the following:
A sample is diluted in the mobile phase (i.e. the above described aqueous eluent composed of 85 wt% of water (containing NaCl 100 mM, NaH₂PO₄ 25 mM and Na₂HPO₄ 25 mM) and 15 wt% of methanol), homogenized at least 4 hours and filtered through 0.45 microns Millipore filter.

Then the sample may be observed by GPC under the following conditions:
- Mobile phase (eluent): 85 wt% of water (containing NaCl 100 mM, NaH₂PO₄ 25 mM and Na₂HPO₄ 25 mM) and 15 wt% of methanol)
- Flow rate: 1 ml / min
- Column: Varian Aquagel OH mixed H 8 µm (3 columns; 30 cm)
- Detection: RI (concentration detector Agilent) + MALLS (Mini Dawn TREOS)
- Sample concentration: about 0.5 weight % (calculated as dry polymer) of the copolymer in the mobile phase (eluent)
- Injection volume: 100 microliter.

Then the calculation of the molar masses relies on the increment of refractive index ("dn/dc") of the polymer. The "dn/dc" value of a specific homo-polymer is known to a person skilled in the art, and can be found for example in POLYMER HANDBOOK. For a copolymer "dn/dc" can be calculated relatively to the weight composition of the copolymer using data available for the adequate homopolymers.

For each specific copolymer, the molar mass may be calculated based on the log (M) = f (elution volume) curve.

The molecular weight of the copolymer is typically greater than 5,000 g/mol. The copolymers of the invention generally exhibit a molecular weight lower than 150,000 g/mol, especially lower than 100,000 g/mol, for example lower than 50,000 g/mol. The molecular weight of the copolymer typically ranges between 5,000 g/mol and 50,000 g/mol, for example between 10,000 g/mol and 40,000 g/mol. According to one embodiment, the molecular weight of the copolymer ranges between 15,000 g/mol and 35,000 g/mol. Automatic dishwashing detergent formulations comprising copolymers exhibiting a molecular weight within this specific range were found to be very effective in terms of scale inhibition.

The copolymer can be provided in any practical form, for example in the dry solid form or in the vectorized form, for example in the form of a solution or of an emulsion or of a suspension, in particular in the form of an aqueous solution. The vectorized form, for example an aqueous solution, can in particular comprise from 5 to 50% by weight of the copolymer, for example from 10 to 30% by weight. The aqueous solution can in particular be a solution obtained by an aqueous-phase preparation process, in particular a radical polymerization process.

The copolymer can be prepared by any appropriate process. The process will generally comprise a stage of radical polymerization (copolymerization), where monomers and a source of free radicals are brought together.

The radical polymerization processes are known to a person skilled in the art. In particular, the source of free radicals, the amount of free radicals, the steps for introducing the various compounds (monomers, source of free radicals), the polymerization temperature and other operating parameters or conditions can be varied in a known and appropriate way. A few details or instructions are given below.

The processes can be processes of batch type, of semibatch type or even of continuous type. A process of semibatch type typically comprises a step of gradual introduction of at least one monomer (comonomer), preferably of all the monomers (comonomers), into a reactor, without continuous departure of the reaction product, the reaction product, comprising the polymer, being recovered all at once at the end of the reaction.

It is noted that the polymerization can advantageously be carried out in aqueous solution.

Any source of free radicals can be used. It is possible in particular to generate free radicals spontaneously, for example by increasing the temperature, with appropriate monomers, such as styrene. It is possible to generate free radicals by irradiation, in particular by UV irradiation, preferably in the presence of appropriate UV-sensitive initiators. It is possible to use initiators or initiator systems of radical or redox type. The source of free radicals may or may not be water-soluble. It may be preferable to use water-soluble initiators or at least partially water-soluble initiators (for example, soluble in water to at least 50% by weight).

Generally, the greater the amount of free radicals, the more easily the polymerization is initiated (it is promoted) but the lower the molecular weights of the copolymers obtained.

Use may in particular be made of the following initiators:
- hydrogen peroxides, such as: tert-butyl hydroperoxide, cumene hydroperoxide, t-butyl peroxyacetate, t-butyl peroxybenzoate, t-butyl peroxyoctoate, t-butyl peroxyneodecanoate, t-butyl peroxyisobutyrate, lauroyl peroxide, t-amyl peroxypivalate, t-butyl peroxypivalate, dicumyl peroxide, benzoyl peroxide, potassium persulfate or ammonium persulfate,
- azo compounds, such as: 2,2'-azobisisobutyronitrile, 2,2'-azobis(2-butanenitrile), 4,4'-azobis(4-pentanoic acid), 1,1'-azobis(cyclohexanecarbonitrile), 2-(t-butylazo)-2-cyanopropane, 2,2'-azobis{2-methyl-N-[1,1-bis(hydroxymethyl)-2-hydroxyethyl]propionamide}, 2,2'-azobis[2-methyl-N-(hydroxyethyl)propionamide], 2,2'-azobis(N,N'-dimethyleneisobutyramidine) dihydrochloride, 2,2'-azobis(2-amidinopropane) dihydrochloride, 2,2'-azobis(N,N'-dimethyleneisobutyramide), 2,2'-azobis{2-methyl-N-[1,1-bis(hydroxymethyl)-2-hydroxyethyl]propionamide}, 2,2'-azobis{2-methyl-N-[1,1-bis(hydroxymethyl)ethyl]propionamide}, 2,2'-azobis[2-methyl-N-(2-hydroxyethyl)propionamide] or 2,2'-azobis(isobutyramide) dihydrate,
- redox systems comprising combinations, such as:
- mixtures of hydrogen peroxide, alkyl peroxide, peresters, percarbonates and of any iron salt, titanous salt, zinc formaldehydesulfoxylate or sodium formaldehydesulfoxylate, and reducing sugars,
- alkali metal or ammonium persulfates, perborates or perchlorates, in combination with an alkali metal bisulfite, such as sodium metabisulfite, and reducing sugars, and
- alkali metal persulfates in combination with an arylphosphinic acid, such as benzenephosphonic acid, and reducing sugars.

The polymerization temperature can in particular be between 25°C and 95°C. The temperature can depend on the source of free radicals. If it is not a source of UV initiator type, it will be preferable to operate between 50°C and 95°C, more preferably between 60°C and 80°C. Generally, the higher the temperature, the more easily the polymerization is initiated (it is promoted) but the lower the molecular weights of the copolymers obtained.

As defined above, the amount by weight of the phosphate group-containing polymer based on the total weight of the automatic dishwashing agent according to the invention is preferably 1 to 20 wt %, more preferably 2 to 15 wt %, even more preferably 3 to 10 wt % and most preferably 4 to 8 wt %.

The automatic dishwashing agents according to the invention may contain additional builders but preferably do not contain any phosphate. "Phosphate-free" or "free of any phosphates", as interchangeably used herein, relates to agents that contain less than 1 wt %, preferably less than 0.5 wt % of inorganic phosphate, including polyphosphate, in particular tripolyphosphate.

A first group of builders that may be used are the inorganic builders, in particular the carbonates and silicates.

The use of carbonate(s) and/or bicarbonate(s), preferably alkali carbonate(s), is especially preferred, and sodium carbonate is especially preferred. Automatic dishwashing agents, characterized in that the automatic dishwashing agent contains, based on its total weight, 2.0 to 50 wt % (bi)carbonate, preferably 4.0 to 45 wt % (bi)carbonate, and in particular 8.0 to 40 wt % (bi)carbonate, are preferred according to the invention.

Crystalline sheet silicates such as amorphous silicates are included in the group of silicates that are preferred for use. However, automatic dishwashing agents according to the invention preferably do not contain any zeolites.

Crystalline sheet silicates of the general formula NaMSiₓO₂ₓ₊₁·yH₂O wherein M denotes sodium or hydrogen, x is a number from 1.9 to 22 preferably from 1.9 to 4, wherein preferred values for x are 2, 3 or 4, and y stands for a number from 0 to 33, preferably from 0 to 20, are preferred for use. The agents according to the invention preferably have an amount by weight of the crystalline sheet silicate of the formula NaMSiₓO₂ₓ₊₁·yH₂O of 0.1 to 20 wt %, preferably 0.2 to 15 wt % and in particular 0.4 to 10 wt %, each based on the total weight of these agents. With respect to the formation of deposits, it has proven advantageous to limit the amount by weight of silicate in the total weight of the automatic dishwashing agent. Preferred automatic dishwashing agents therefore contain less than 8.0 wt % silicate, especially preferably less than 6.0 wt % silicate and in particular less than 4.0 wt % silicate, i.e., between 0.1 and 4.0 wt % silicate, for example. Amorphous sodium silicates with a Na₂O:SiO₂ modulus of 1:2 to 1:3.3, preferably from 1:2 to 1:2.8, and in particular from 1:2 to 1:2.6 may also be used.

A second group of builders that may be used are the organic builders, in particular citrate, polycarboxylic acids, amino carboxylic acids, phosphonates and sulfopolymers.

Citrate is an especially preferred ingredient of the agents according to the invention. The term "citrate" includes both citric acid and its salts, in particular its alkali metal salts. Especially preferred automatic dishwashing agents according to the invention contain citrate, preferably sodium citrate, in amounts of 12 to 50 wt %, preferably 15 to 40 wt % and in particular 15 to 30 wt %, each based on the total weight of the automatic dishwashing agent.

Other usable organic builder substances include, for example, the polycarboxylic acids that may be used in the form of the free acid and/or their sodium salts, wherein polycarboxylic acids are understood to be carboxylic acids having more than one acid function. For example, these may include adipic acid, succinic acid, glutaric acid, malic acid, tartaric acid, maleic acid, fumaric acid, sugar acids, aminocarboxylic acids, nitrilotriacetic acid (NTA), if such a use is not objectionable for ecological reasons, as well as mixtures thereof. The free acids typically also have the property of an acidifying component in addition to their builder effect and therefore they are also used to adjust a lower and milder pH of the washing or cleaning agents. Succinic acid, glutaric acid, adipic acid, glucuronic acid and any mixtures thereof may be mentioned here in particular.

Still further usable organic builder substances include, without limitation, amino carboxylic acids that may be used in the form of the free acid and/or salts thereof, particularly the sodium salts. Suitable compounds include, without being limited thereto, methyl glycine diacetic acid (MGDA) or salts thereof, glutamine diacetic acid (GLDA) or salts thereof or ethylene diamine diacetic acid (EDDS) or salts thereof. These may be contained in amounts of 0.1 to 15 wt %, preferably 0.5 to 10 wt % and more preferably of 0.5 to 6 wt %. These may be used alone or in combination with any of the afore-mentioned builders.

The automatic dishwashing agent may, in various embodiments, comprise chelating phosphonates. Particularly preferred are hydroxyalkane phosphonates and/or aminoalkane phosphonates. Of the hydroxyalkane phosphonates, 1-hydroxyethane-1,1-diphosphonate (HEDP) is particularly important as a cobuilder. It is preferably used as a sodium salt; the disodium salt gives a neutral reaction and the tetrasodium salt gives an alkaline reaction (pH 9). Ethylene diamine tetramethylene phosphonate (EDTMP), diethylenetriamine pentamethylene phosphonate (DTPMP) and their higher homologs are preferably considered as the aminoalkane phosphonates. They are preferably used in the form of the neutral sodium salts, e.g., as hexasodium salt of EDTMP and/or as the hepta- and octasodium salts of DTPMP. HEDP is preferably used as a builder from the class of phosphonates. The aminoalkane phosphonates also have a pronounced heavy metal binding capacity. Accordingly, it may be preferable to use aminoalkane phosphonates, in particular DTPMP, or mixtures of the aforementioned phosphonates, in particular when the agents also contain bleaches.

Automatic dishwashing agents which contain 1-hydroxyethane-1,1diphosphonic acid (HEDP) or diethylenetriamine penta(methylenephosphonic acid) (DTPMP) as the phosphonates are especially preferred. The automatic dishwashing agents according to the invention may of course contain two or more different phosphonates. The amount by weight of phosphonates, relative to the total weight of the automatic dishwashing agents according to the invention, is preferably 1 to 8 wt %, preferably 1.2 to 6 wt % and in particular 1.5 to 4 wt %.

Another group of organic builder substances is a group of polymers comprising monomers with sulfonic acid groups (and/or neutralized sulfonate groups). In addition to the sulfonic acid group monomers, these preferred polymers may also comprise unsaturated carboxylic acid monomers. These may be contained in amounts of 1 to 20 wt %, preferably 5 to 15 wt %. In preferred embodiments, the automatic dishwashing agents comprise at least one phosphate group-containing polymer as defined above and at least one sulfopolymer as defined above, in the amounts described herein.

Preferred sulfonic acid group monomers that may be used to form the polymeric sulfonate include those of the formula, R⁵(R⁶)C=C(R⁷)-X-SO₃H, in which R⁵ to R⁷ independently of one another stand for -H, -CH₃, a linear or branched, saturated alkyl residue with 2 to 12 carbon atoms, a linear or branched mono- or polyunsaturated alkenyl residue with 2 to 12 carbon atoms, alkyl or alkenyl residues substituted with -NH₂, -OH or -COOH or stands for -COOH or -COOR₄ wherein R⁴ is a saturated or unsaturated linear or branched hydrocarbon residue with 1 to 12 carbon atoms and X is an optional spacer group selected from -(CH₂)ₙ wherein n=0 to 4, -COO-(CH₂)ₖ wherein k=1 to 6,-C(O)-NH-C(CH₃)₂-, -C(O)-NH-C(CH₃)₂-CH₂- and -C(O)-NH-CH(CH₂CH₃)-.

Of these, the preferred monomers are selected from the group consisting of:

H₂C=CH-X-SO₃H,

H₂C=C(CH₃)-X-SO₃H,

HO₃S-X-(R⁶)C=C(R⁷)-X-SO₃H,

and mixtures thereof, wherein R⁶ and R⁷ independently of one another are selected from -H, -CH₃,-CH₂CH₃, -CH₂CH₂CH₃, -CH(CH₃)₂ and X stands for a spacer group which is optionally present and is selected from (CH₂)ₙ wherein n=0 to 4, -COO-(CH₂)ₖ wherein k=1 to 6, -C(O)-NH-C(CH₃)₂-, -C(O)-NH-C(CH₃)₂- and C(O)-NH-CH(CH₂CH₃)-.

Especially preferred sulfonic acid group monomers include 1-acrylamido-1-propanesulfonic acid, 2-acrylamido-2-propanesulfonic acid, 2-acrylamino-2-methyl-1-propanesulfonic acid, 2-methacrylamido-2-methyl-1-propanesulfonic acid, 3-methacrylamido-2-hydroxypropanesulfonic acid, allylsulfonic acid, methallylsulfonic acid, allyloxybenzene sulfonic acid, methallyloxybenzene sulfonic acid, 2-hydroxy-3-(2-propenyloxy)propane sulfonic acid, 2-methyl-2-propene-1-sulfonic acid, styrene sulfonic acid, vinyl sulfonic acid, 3-sulfopropylacrylate, 3-sulfopropyl methacrylate, sulfo-methacrylamide, sulfomethyl methacrylamide, and mixtures thereof, and any water-soluble salts thereof.

The sulfonic acid groups in these sulfonate polymers may be present partially or entirely in neutralized form, i.e., the acidic hydrogen atom of the sulfonic acid group in some or all of the sulfonic acid groups may be replaced with metal ions, preferably alkali metal ions and in particular sodium ions. The use of partially or fully neutralized copolymers containing sulfonic acid groups is preferred according to the invention.

Preferred unsaturated carboxylic acid monomers that may be included are unsaturated carboxylic acids of the formula R¹(R²)C=C(R³)COOH in which R¹ to R³ independently of one another stand for -H, -CH₃, a linear or branched, saturated alkyl residue with 2 to 12 carbon atoms, a linear or branched mono- or polyunsaturated alkenyl residue with 2 to 12 carbon atoms, alkyl or alkenyl residues substituted with -NH₂, -OH or -COOH as defined above or stands for -COOH or -COOR⁴ wherein R⁴ is a saturated or unsaturated, linear or branched hydrocarbon residue with 1 to 12 carbon atoms.

Especially preferred unsaturated carboxylic acids include acrylic acid, methacrylic acid, ethacrylic acid, α-chloroacrylic acid, α-cyanoacrylic acid, crotonic acid, α-phenylacrylic acid, maleic acid, maleic anhydride, fumaric acid, itaconic acid, citraconic acid, methylene malonic acid, sorbic acid, cinnamic acid, or mixtures thereof. The unsaturated dicarboxylic acids may of course also be used.

When the sulfonate polymers comprise both sulfonate group monomers and carboxylic acid group monomers, the monomer distribution in these polymers is preferably 5 to 95 wt. % unsaturated sulfonic acid monomers and 10 to 50 wt. % unsaturated carboxylic acid monomers. It is especially preferred that the monomer distribution is 50-90 wt. % unsaturated sulfonic acid monomers and 10-50 wt. % unsaturated carboxylic acid monomers. These preferred weight percentages of monomers are based on the total weight of the sulfonate polymer (not total weight of agent composition).

The molecular weight of the sulfonate copolymers preferred for use according to the invention may be varied to adapt the properties of the polymers to the desired intended purpose. Preferred automatic dishwashing agents are characterized in that the copolymers have molecular weights of 2,000 to 200,000 g/mol, preferably from 400 to 25,000 g/mol, and in particular, from 5,000 to 15,000 g/mol.

In another preferred embodiment, the polymer sulfonates may also comprise at least one nonionic, preferably hydrophobic monomer. The use of a more hydrophobic polymer improves the clear rinsing performance of the automatic dishwashing agents herein.

Preferred nonionic monomers are of the general formula R¹(R²)C=C(R³)-X-R⁴ in which R¹ to R³ independently denote -H, -CH₃ or -C₂H₅; X represents a spacer group that is optionally present and selected from the group CH₂, -C(O)O- and -C(O)-NH-; and, R⁴ denotes a linear or branched, saturated alkyl residue with 2 to 22 carbon atoms or for an unsaturated, preferably aromatic, residue with 6 to 22 carbon atoms.

Especially preferred nonionic monomers are selected from the group consisting of butene, isobutene, pentene, 3-methylbutene, 2-methylbutene, cyclopentene, hexane, 1-hexane, 2-methyl-1-pentene, 3-methyl-1-pentene, cyclohexene, methyl cyclopentene, cycloheptene, methyl cyclohexene, 2,4,4-trimethyl-1-pentene, 2,4,4-trimethyl2-pentene, 2,3-dimethyl-1-hexene, 2,4-dimethyl-1-hexene, 2,5-dimethyl-lhexene, 3,5-dimethyl-1-hexene, 4,4-dimethyl-1-hexane, ethyl cyclohexyne, 1-octene, α-olefins with 10 or more carbon atoms, such as 1-decene, 1-dodecene, 1-hexadecene, 1-octadecene and C22-α-olefin, 2-styrene, α-methylstyrene, 3-methylstyrene, 4-propylstyrene, 4-cyclohexylstyrene, 4-dodecylstyrene, 2-ethyl-4-benzylstyrene, 1-vinylnaphthalene, 2-vinylnaphthalene, acrylic acid methyl ester, acrylic acid ethyl ester, acrylic acid propyl ester, acrylic acid butyl ester, acrylic acid pentyl ester, acrylic acid hexyl ester, methacrylic acid methyl ester, N-(methyl)acrylamide, acrylic acid 2-ethylhexyl ester, methacrylic acid 2-ethylhexyl ester, N-(2-ethylhexyl) acrylamide, acrylic acid octyl ester, methacrylic acid octyl ester, N-(octyl)acrylamide, acrylic acid lauryl ester, methacrylic acid lauryl ester, N-(lauryl)acrylamide, acrylic acid stearyl ester, methacrylic acid stearyl ester, N-(stearyl)acrylamide, acrylic acid behenyl ester, methacrylic acid behenyl ester, N-(behenyl)acrylamide, and mixtures thereof.

Preferred automatic dishwashing agents in accordance with the present invention may also comprise an anionic polymer comprising: (i) mono- or polyunsaturated monomers from the group of carboxylic acids; (ii) mono- or polyunsaturated monomers from the group of sulfonic acids; and (iii) optionally additional ionic and/or nonionic monomers. The amount by weight of these polymers in the total weight of the automatic dishwashing agent is preferably 2.0 to 20 wt %, preferably 2.5 to 15 wt % and in particular 2.5 to 10 wt %.

In various embodiments, the automatic dishwashing agent comprises, based on the total weight of the automatic dishwashing agent, 8.0 to 40 wt % (bi)carbonate; 15 to 30 wt % citrate; 1.5 to 4 wt % of at least one phosphonate, preferably HEDP; and 5 to 15 wt % of at least one sulfopolymer.

Preferred automatic dishwashing agents also contain surfactants, preferably nonionic and/or amphoteric surfactants.

The amount by weight of the nonionic surfactant, relative to the total weight of the automatic dishwashing agent, is preferably 0.1 to 15 wt %, preferably 0.2 to 10 wt %, especially preferably 0.5 to 8 wt %, and in particular 1.0 to 6 wt %.

Preferred nonionic surfactants are end group-capped nonionic surfactants from the group of hydroxy mixed ethers. These nonionic surfactants have proven to be superior to the other known nonionic surfactants from the state of the art.

Another preferred ingredient of the automatic dishwashing agents according to the invention is nonionic surfactants of the general formula:

R¹-CH(OH)CH₂O-(AO)_{w}-(A'O)ₓ-(A"O)_{y}-(A'"O)_{z}-R² >

wherein R¹ and R² denote a C2-26 alkyl residue; A, A', A" and A'" independently denote a residue selected from the group of -CH₂CH₂, -CH₂CH₂-CH₂, -CH₂CH(CH₃), -CH₂-CH₂-CH₂-CH₂, -CH₂-CH(CH₃)-CH₂-, and -CH₂-CH(CH₂-CH₃); and w, x, y and z denote values between 0.5 and 120, wherein x, y and/or z may also be 0.

Automatic dishwashing agents according to the invention, in which at least one of the nonionic surfactants has the aforementioned general formula, are preferred, in particular those end group-capped polyoxyalkylated nonionic surfactants which also have a linear or branched, saturated or unsaturated, aliphatic or aromatic hydrocarbon residue R² with 1 to 30 carbon atoms, wherein x stands for values between 1 and 90, preferably for values between 30 and 80 and in particular for values between 30 and 60 according to the formula R¹O[CH₂CH₂O]ₓCH₂CH(OH)R² in addition to a residue R¹ which stands for linear or branched, saturated or unsaturated, aliphatic or aromatic hydrocarbon residues with 2 to 30 carbon atoms, preferably with 4 to 22 carbon atoms.

Especially preferred are the surfactants of the formula R¹O[CH₂CH(CH₃)O]ₓ[CH₂CH₂O]_{y}CH₂CH(OH)R², in which R¹ denotes a linear or branched aliphatic hydrocarbon residue with 4 to 18 carbon atoms or mixtures thereof; R² denotes a linear or branched hydrocarbon residue with 2 to 26 carbon atoms or mixtures thereof; x stands for values between 0.5 and 1.5; and, y stands for a value of at least 15.

The group of these nonionic surfactants includes, for example, the C₂₋₂₆ fatty alcohol (PO)₁-(EO)₁₅₋₄₀-2-hydroxyalkyl ethers, in particular also the C₈₋₁₀ fatty alcohol (PO)₁-(EO)₂₂-2-hydroxydecyl ethers.

In addition, preferred are those end group-capped polyoxyalkylated nonionic surfactants of the formula R¹O[CH₂CH₂O]ₓ[CH₂CH(R³)O]_{y}CH₂CH(OH)R², in which R¹ and R² independently of one another stand for a linear or branched, saturated or mono- and polyunsaturated hydrocarbon residue with 2 to 26 carbon atoms, each R³ independently is selected from -CH₃, -CH₂CH₃, -CH₂CH₂-CH₃, -CH(CH₃)₂, but preferably stands for -CH₃, and x and y independently of one another stand for values between 1 and 32, wherein nonionic surfactants in which R³ = -CH₃ and values for x are from 15 to 32 and y are from 0.5 and 1.5 are most especially preferred.

Additional nonionic surfactants preferred for use here include the end group-capped polyoxyalkylated nonionic surfactants of the formula R¹O[CH₂CH(R³)O]ₓ[CH₂]ₖCH(OH)[CH₂]ⱼOR² in which R¹ and R² stand for linear or branched, saturated or unsaturated aliphatic or aromatic hydrocarbon residues with 1 to 30 carbon atoms, R³ stands for H or a methyl, ethyl, n-propyl, isopropyl, n-butyl, 2-butyl or 2-methyl-2-butyl residue, x stands for values between 1 and 30, k and j stand for values between 1 and 12, preferably between 1 and 5. When the value x ≥ 2, then any R³ in the above formula R¹O[CH₂CH(R³)O]ₓ[CH₂]ₖCH(OH)[CH2]ⱼOR² may be different. R¹ and R² are preferably linear or branched, saturated or unsaturated, aliphatic or aromatic hydrocarbon residues with 6 to 22 carbon atoms, wherein residues with 8 to 18 carbon atoms are especially preferred. For the residue R³, H, CH₃ or CH₂CH₃ is especially preferred. Especially preferred values for x are in the range from 1 to 20, in particular from 6 to 15.

As described above, each R³ in the formula given above may be different, if x ≥2. The alkylene oxide unit in the brackets may be varied in this way. For example, if x stands for 3, then the R³ residue may be selected to form ethylene oxide (R³=H) units or propylene oxide (R³=CH3) units, which may be joined to one another in any order, for example (EO)(PO)(EO), (EO)(EO)(PO), (EO)(EO)(EO), (PO)(EO)(PO), (PO)(PO)(EO) and (PO)(PO)(PO). The value 3 for x has been selected as an example and may readily be larger, in which case the range of variation increased with increasing x values and includes, for example, a large number of (EO) groups combined with a small number of (PO) groups or vice versa.

Especially preferred end group-capped polyoxyalkylated alcohols of the formula given above have values of k=1 and j=1, so that the formula given above is simplified to R¹O[CH₂CH(R³)O]ₓCH₂CH(OH)CH₂OR². In the latter formula, R¹, R² and R³ are defined as above, and x stands for numbers from 1 to 30, preferably from 1 to 20 and in particular from 6 to 18. Surfactants in which the residues R¹ and R² have 9 to 14 carbon atoms, wherein R³ stands for H and x assumes values of 6 to 15 are especially preferred.

Finally, nonionic surfactants of the general formula R¹-CH(OH)CH₂O-(AO)_{w}-R² have proven to be especially effective, wherein R¹ denotes a linear or branched, saturated or mono- and/or polyunsaturated C₆₋₂₄ alkyl or alkenyl residue; R² denotes a linear or branched hydrocarbon residue with 2 to 20 carbon atoms; A denotes a residue selected from the group -CH₂CH₂, -CH₂CH₂-CH₂, -CH₂-CH(CH₃); and w stands for values between 10 and 120, preferably 10 to 80, in particular 20 to 40.

For example, the C₄₋₂₂ fatty alcohol (EO)₁₀₋₈₀-2-hydroxyalkyl ether, in particular also the C₈₋₁₂ fatty alcohol (EO)₂₂-2-hydroxydecyl ether and C₄₋₂₂ fatty alcohol-(EO)₄₀₋₈₀-2-hydroxyalkyl ether belong to this group of nonionic surfactants.

Preferred automatic dishwashing agents according to the invention are free of anionic surfactants.

In addition to the polymers, builders and nonionic surfactants described above, the automatic dishwashing agents according to the invention preferably contain additional active ingredients, in particular active ingredients from the group of enzymes, bleaching agents, bleach activators and bleach catalysts, corrosion inhibitors, glass corrosion inhibitors, scents or dyes.

Automatic dishwashing agents according to the invention may contain enzyme(s) as an additional ingredient. These include in particular proteases, amylases, lipases, hemicellulases, cellulases, perhydrolases or oxidoreductases as well as preferably the mixtures thereof. These enzymes are of natural origin in principle. Starting from the natural molecules, improved variants are available for use in washing or cleaning agents, and are preferably used accordingly. Washing or cleaning agents preferably contain enzymes in total amounts of 1*10⁻⁶ to 5 wt %, based on active protein. The protein concentration may be determined with the help of known methods, for example, the BCA method or the biuret method. Especially preferred automatic dishwashing agents also contain enzyme(s), preferably protease and/or amylase.

Of the proteases, those of the subtilisin type are preferred. Examples include the subtilisins BPN' and Carlsberg as well as their further developed forms, protease PB92, the subtilisins 147 and 309, the alkaline protease from *Bacillus lentis,* subtilisin DY and the enzymes thermitase, proteinase K and proteases TW3 and TW7, which can be assigned to the subtilases but not to the subtilisins in the narrower sense.

Examples of amylases that may be used according to the invention include the α-amylases from *Bacillus licheniformis,* from *B. amyloliquefaciens,* from *B. stearothermophilus,* from *Aspergillus niger* and *A. oryzae* as well as the further developments of the afore-mentioned amylases, which have been improved for use in washing and cleaning agents.

In addition, lipases or cutinases can also be used according to the invention, in particular because of their triglyceride-cleaving activities but also in order to create peracids *in situ* from suitable precursors. These include, for example, the lipases that can be obtained originally from *Humicola lanuginose (Thermomyces lanuginosus)* and/or further developed lipases, in particular those with the amino acid exchange D96L.

In addition, enzymes which may be combined under the term "hemicellulases" may also be used. These include, for example, mannanases, xanthan lyases, pectin lyases (=pectinases), pectin esterases, pectate lyases, xyloglucanases (=xylanases), pullulanases and β-glucanases.

To increase the bleaching effect, oxidoreductases, for example, oxidases, oxygenases, catalases, peroxidases such as halo-, chloro-, bromo-, lignin, glucose or manganese peroxidases, dioxygenases or laccases (phenol oxidases, polyphenol oxidases) may be used according to the invention to increase the bleaching effect. In addition, preferably organic, especially preferably aromatic compounds which interact with the enzymes are advantageously also added to enhance the activity of the respective oxidoreductases (enhancers) or to ensure the electron flow when there is a greater difference in redox potentials between the oxidizing enzymes and the soiling (mediators).

A preferred automatic dishwashing agent according to the invention is characterized in that the automatic dishwashing agent contains, based on its total weight, enzyme preparation(s) in amounts of 0.1 to 12 wt %, preferably from 0.2 to 10 wt % and in particular from 0.5 to 8 wt %.

The dishwashing agents may contain stabilizers to stabilize proteins and/or enzymes during storage, such as against damage from inactivation, denaturing, decomposition, oxidation, or proteolytic cleavage. Inhibition of proteolysis is often preferable, in particular when the agents contain proteases and when the proteins and/or enzymes are produced microbially.

Washing or cleaning active proteases and amylases are not usually supplied in the form of the pure protein but instead are supplied in the form of stabilized preparations suitable for storage and shipping. These prefabricated preparations include, for example, the solid preparations obtained by granulation, extrusion of lyophilization or in particular in the case of liquid or gelatinous agents, solutions of the enzymes, advantageously with the highest possible concentration, a low water content and/or mixed with stabilizers or other auxiliary agents.

As can be seen from the previous discussion, the enzyme protein forms only a fraction of the total weight of the usual enzyme preparations. Protease and amylase preparations preferred for use according to the invention contain between 0.1 and 40 wt %, preferably between 0.2 and 30 wt %, especially preferably between 0.4 and 20 wt % and in particular between 0.8 and 10 wt % of the enzyme protein.

Automatic dishwashing agents according to the invention may also comprise a bleaching agent, wherein oxygen bleaching agents are preferred. Of the compounds which supply H₂O₂ in water and serve as bleaching agents, sodium percarbonate, sodium perborate tetrahydrate and sodium perborate monohydrate are especially important. Additional bleaching agents that can be used include, for example, peroxypyrophosphates, citrate perhydrates as well as peracid salts or peracids, which supply H₂O₂, such as perbenzoates, peroxophthalates, diperazelaic acid, phthaloimino peracid or diperdodecanedioic acid.

In addition, bleaching agents from the group of organic bleaching agents may also be used. Typical organic bleaching agents include the diacyl peroxides, for example, dibenzoyl peroxide. Other typical organic bleaching agents include the peroxy acids, the alkylperoxy acids and the arylperoxy acids being mentioned in particular as examples.

Preferred automatic dishwashing agents according to the invention are characterized in that they contain an oxygen bleaching agent, preferably sodium percarbonate, especially preferably a coated sodium percarbonate. The amount by weight of the bleaching agent based on the total weight of the dishwashing agent is between 2.0 and 30 wt %, preferably between 4.0 and 20 wt % and in particular between 6.0 and 15 wt % in preferred embodiments.

The automatic dishwashing agents according to the invention may also contain bleach activators. These compounds yield aliphatic peroxycarboxylic acids, preferably 1 to 10 carbon atoms, in particular 2 to 4 carbon atoms and/or optionally substituted perbenzoic acid under perhydrolysis conditions. Substances having O- and/or N-acyl groups of the aforementioned number of carbon atoms and/or optionally substituted benzoyl groups are suitable. Polyacylated alkylenediamines are preferred, and tetraacetyl ethylene diamine (TAED) has proven to be especially suitable. These bleach activators, in particular TAED, are preferably used in amounts of up to 10 wt %, in particular 0.1 wt % to 10 wt %, especially 0.5 to 8 wt %, and especially preferably 1.0 to 6 wt %.

In addition, or as an alternative to conventional bleach activators, the automatic dishwashing agents may comprise bleach potentiating transition metal salts and/or transition metal complexes, such as Mn-, Fe-, Co-, Ru- or Mo-salene complexes or carbonyl complexes. Mn, Fe, Co, Ru, Mo, Ti, V and Cu complexes with tripod ligands containing N and Co, Fe, Cu and Ru amine complexes may be used as bleach catalysts.

Complexes of manganese in the oxidation stage II, III, IV or IV, preferably containing one or more macrocyclic ligand(s) with the donor functions N, NR, PR, O and/or S are especially preferred.

Ligands having nitrogen donor functions are preferred for use. In the agents according to the invention, it is especially preferred to use bleach catalyst(s), which contain as macromolecular ligands 1,4,7-trimethyl-1,4,7-triazacyclononane (Me-TACN), 1,4,7-triazacyclononane (TACN), 1,5,9-trimethyl-1,5,9-triazacyclododecane (Me-TACD), 2-methyl-1,4,7-trimethyl-1,4,7-triazacyclononane (Me/Me-TACN) and/or 2-methyl-1,4,7-triazacyclononane (Me/TACN).

Automatic dishwashing agents, characterized in that they also contain a bleach catalyst selected from the group of bleach potentiating transition metal salts and transition metal complexes, preferably from the group of complexes of manganese with 1,4,7-trimethyl-1,4,7-triazacyclononane (Me3-TACN) or 1,2,4,7-tetramethyl-1,4,7-triazacyclononane (Me4-TACN), are preferred according to the invention because the cleaning result can be improved significantly by the aforementioned bleach catalyst.

The aforementioned bleach potentiating transition metal complexes in particular with the central atoms Mn and Co are used in the usual amounts, preferably in an amount of up to 5 wt %, in particular of 0.0025 wt % to 1 wt % and especially preferably from 0.01 wt % to 0.30 wt %, each based on the total weight of the agent containing the bleach catalyst. In special cases, however, more bleach catalyst may also be used.

The automatic dishwashing agents according to the invention may be present in fabricated forms with which the skilled person is familiar, i.e., for example, in solid or liquid form, but also as a combination of solid and liquid forms.

Suitable solid forms include in particular powders, granules, exudates or compacted forms, in particular tablets. The liquid forms based on water and/or organic solvents may be thickened, in the form of gels.

If they are fabricated in liquid form, preferred automatic dishwashing agents according to the invention have a water content of 20 to 70 wt %, preferably 30 and 60 wt % and in particular 35 and 55 wt %, based on the total weight of the agent.

Agents according to the invention may be fabricated as single-phase products or multiphase products. Automatic dishwashing agents having one, two, three or four phases are preferred in particular. Automatic dishwashing agents, characterized in that they are present in the form of a prefabricated dosing unit having two or more phases are especially preferred.

The individual phases of multiphase agents may have the same or different aggregate states. Automatic dishwashing agents containing at least two different solid phases and/or at least two liquid phases and/or at least one solid phase and at least one liquid phase are preferred in particular. Two-phase or multiphase tablets, for example, two-layer tablets, in particular two-layer tablets with a hollow depression and a molded body in the depression are especially preferred.

Automatic dishwashing agents preferred according to the invention are in the form of a tablet, preferably in the form of multilayer tablet.

Automatic dishwashing agents according to the invention are preferably prefabricated to dosing units. These dosing units preferably encompass the amount of washing or cleaning-active substance required for one cleaning cycle. Preferred dosing units have a weight between 12 and 30 g, preferably between 14 and 26 g and in particular between 15 and 22 g.

The volume of the aforementioned dosing units and also their three-dimensional shape are selected so that the ability of the prefabricated units to be dosed through the dosing chamber of a dishwasher is ensured. The volume of the dosing unit is therefore preferably between 10 and 35 mL, preferably between 12 and 30 mL and in particular between 15 and 25 mL.

The automatic dishwashing agents according to the invention, in particular the prefabricated dosing units, preferably have a water-soluble coating.

To facilitate the disintegration of prefabricated molded bodies, it is possible to incorporate disintegration aids, so-called tablet disintegrants, into these agents to shorten the disintegration time.

These substances, which are also known as "disintegrants" based on their effect, increase their volume on contact with water, which increases the inherent volume on the one hand (swelling) but also a pressure can be created through the release of gases, causing the tablet to disintegrate into smaller particles. The old familiar disintegration aids include, for example, carbonate/citric acid systems, but other organic acids may also be used. Swelling disintegration aids include, for example, synthetic polymers such as polyvinylpyrrolidone (PVP) or natural polymers and/or modified natural substances such as cellulose and starch and their derivatives or alginates or casein derivatives.

Disintegration aids in amounts of 0.5 to 10 wt %, preferably 3 to 7 wt % and in particular 4 to 6 wt %, each based on the total weight of the agent containing the disintegration aid, are preferably used.

Disintegration agents based on cellulose are used as the preferred disintegrants, so that preferred washing or cleaning agents contain such a disintegrant, based on cellulose in amounts of 0.5 to 10 wt %, preferably 3 to 7 wt % and in particular 4 to 6 wt %. The cellulose used as a disintegrant is preferably not used in finely divided form, but instead it is converted to a coarser form, for example, by granulating or compacting, before being added to the premixes to be pressed. The particle sizes of such disintegrants are usually greater than 200 µm, preferably at least 90 wt % being between 300 and 1600 µm, and in particular at least 90 wt % being between 400 and 1200 µm.

Preferred disintegration aids, preferably a disintegration aid based on cellulose, preferably in granular, co-granulated or compacted form, are contained in the agents containing the disintegrant in amounts of 0.5 to 10 wt %, preferably from 3 to 7 wt % and in particular from 4 to 6 wt %, each based on the total weight of the agent containing the disintegrant.

In addition effervescent systems which release gases may also preferably be used as tablet disintegration aids according to the invention. Preferred effervescent systems, however, consist of at least two ingredients which react with one another to form a gas, for example, alkali metal carbonate and/or bicarbonate and an acidifying agent, which is suitable for releasing carbon dioxide from the alkali metal salts in aqueous solution. An acidifying agent which releases carbon dioxide from the alkali salts in aqueous solution is citric acid, for example.

The active ingredient combinations described above is suitable in particular for cleaning dishes in automatic dishwashing methods. Another subject of the present patent application is a method for cleaning dishes in a dishwashing machine using an automatic dishwashing agent according to the invention, wherein the automatic dishwashing agent is preferably dosed into the interior of a dishwasher during its run through a dishwashing program. The dosing may occur before the start of the main rinse cycle or in the course of the main rinse cycle. The dosing, i.e., the addition of the agent according to the invention to the interior of the dishwasher may take place manually, but the agent is preferably dosed into the interior of the dishwasher by means of the dosing chamber of the dishwasher. In the course of the cleaning process, preferably no additional water softener and no additional clear rinse agent are added to the interior of the dishwasher.

The automatic dishwashing agents according to the invention exhibit their advantageous cleaning and drying properties even in low-temperature cleaning methods. Preferred dishwashing methods using the agents according to the invention are therefore characterized in that the dishwasher methods are performed at a liquor temperature below 60°C., preferably below 50°C.

The agents according to the invention are characterized by a reduced formation of deposits in comparison with traditional automatic dishwashing agents. Therefore, a method of preventing the formation of deposits (scale formation) on surfaces, in particular glass, plastic, metal or china surfaces, in automatic dishwashing by using an automatic dishwashing agent according to the invention is another embodiment of the present invention. Similarly, the use of the phosphate group containing polymers described herein in an automatic dishwashing agent for improving cleaning performance, in particular by preventing scale formation, in automatic dishwashing is a still further embodiment of the invention.

It is our understood that all embodiments disclosed herein in relation to the agents of the invention are similarly applicable in the disclosed methods and uses and vice versa. For example, all specific embodiments of the phosphate group-containing polymers described herein in relation to the automatic dishwashing agents are similarly applicable in the disclosed methods and uses.

### Examples

### Example 1: Synthesis of a 75/14/11 wt/wt AA, MAA, PAM4000 18500 g/mol copolymer

In a 300 L stainless steel jacketed reactor equipped with mechanical stirring, N₂ blanket and reflux condenser 91.2kg of water were added. The charge was then inerted with N₂, keeping a slight over pressure, and the content heated to 70 +/-2°C. Once the reaction temperature was reached, a mixture of 6.0kg of sodium metabisulfite and 11.4kg of water, a mixture of 3.3kg of sodium persulfate and 6.2kg of water and a mixture of 65.0kg of acrylic acid, 11.6kg of methacrylic acid, 9.7kg of SIPOMER PAM4000 and 8.6kg of waterwere added continuously in 240 minutes. Once the additions were over, the mixture was aged for 60minutes at 70 +/-2°C. Upon the aging step a mixture of 1.5kg of sodium metabisulfite and 2.8kg of water were added to the reactor in 10 minutes and the mixture aged at 70°C for 30 minutes. It was then cooled down below 30°C and the pH adjusted to 7 with 50%wt NaOH, keeping the temperature below 40°C.

A molar mass of 18,500 g/mol was determined by GPC, with MALLS detection following the chromatographic conditions and calculations detailed in the description (using a dn/dc value of 0.162 mL/g for the copolymer).

### Example 2: Synthesis of a 75/14/11 wt/wt AA, MAA, PAM4000 30000 g/mol copolymer

In a 2.5 L glass jacketed reactor equipped with mechanical stirring, N₂ inlet and reflux condenser 396.6g of water were added. The charge was then inerted with a N₂ flow of 0.2L/minute and the content heated to 70 +/-2°C. Once the reaction temperature was reached, a mixture of 21.3g of sodium metabisulfite and 39.5g of water, a mixture of 11.6g of sodium persulfate and 21.6g of water and a mixture of 226.1g of acrylic acid, 40.4g of methacrylic acid, 33.6g of SIPOMER PAM4000 and 30g of water were added continuously in 180 minutes. Once the additions are over, the mixture was aged for 60minutes at 70 +/-2°C and then cooled to below 30°C. The pH was adjusted to 7 with 50%wt NaOH keeping the temperature below 40°C.

A molar mass of 30,000 g/mol was determined by GPC, with MALLS detection following the chromatographic conditions and calculations detailed in the description (using a dn/dc value of 0.162 mL/g for the copolymer).

### Example 3: Synthesis of a 75/14/11 wt/wt AA, MAA, PAM4000 40000 g/mol copolymer

In a 300 L stainless steel jacketed reactor equipped with mechanical stirring, N₂ inlet and reflux condenser 91.2kg of water were added. The charge was then inerted with N₂ with a flow rate of 200-300m³/h and the content heated to 70 +/-2°C. Once the reaction temperature was reached, a mixture of 5.4kg of sodium metabisulfite and 11.4kg of water, a mixture of 3.0kg of sodium persulfate and 6.2kg of water and a mixture of 65.0kg of acrylic acid, 11.6kg of methacrylic acid, 9.7kg of SIPOMER PAM4000 and 8.6kg of water were added continuously in 240 minutes. Once the additions were over, the mixture was aged for 60minutes at 70 +/-2°C. Upon the aging step a mixture of 1.35kg of sodium metabisulfite and 2.8kg of water were added to the reactor in 10 minutes and the mixture aged at 70°C for 30 minutes. It was then cooled down below 30°C and the pH adjusted to 7 with 50%wt NaOH keeping the temperature below 40°C.

A molar mass of 40,000 g/mol was determined by GPC, with MALLS detection following the chromatographic conditions and calculations detailed in the description (using a dn/dc value of 0.162 mL/g for the copolymer).

### Example 4: Automatic dishwashing agent formulations

V1: Automatic dishwashing agent (not according to the invention)
V2: V1 + 10 wt % sulfopolymer (not according to the invention)
E1: V1 + 10 wt % sulfopolymer + 6 wt % phosphate group-containing polymer synthesized according to Example 2
E2: V1 + 6 wt % phosphate group-containing polymer synthesized according to Example 2

The automatic dishwashing agent V1 was in form of a two-layer tablet with a hollow depression and a molded body in the depression. Its composition is shown in Table 1. The polymers were, when used, dosed in addition to the tablet.

**Table 1:**

| Components (wt %) | wt % | g/job |
|---|---|---|
| **Layer 1** | | |
| Sodium citrate dihydrate | 10.24 | 1.84 |
| Citric acid | 4.06 | 0.73 |
| Sodium percarbonate | 14.47 | 2.60 |
| TAED | 1.67 | 0.30 |
| Sodium carbonate | 17.87 | 3.21 |
| Bleach catalyst | 1.28 | 0.23 |
| HEDP | 2.28 | 0.41 |
| Nonionic surfactant | 4.18 | 0.75 |
| Zinc acetate | 0.22 | 0.04 |
| Colorant | 0.56 | 0.10 |
| Polyacrylate | 6.74 | 1.21 |

| **Layer 2** | | |
|---|---|---|
| Protease | 2.62 | 0.47 |
| Amylase | 0.45 | 0.08 |
| Sodium citrate dihydrate | 9.02 | 1.62 |
| Sodium carbonate | 7.96 | 1.43 |
| TAED | 1.17 | 0.21 |
| Silicate | 3.45 | 0.62 |
| Nonionic surfactant | 0.72 | 0.13 |
| Polyacrylate | 0.56 | 0.10 |
| HEDP | 0.56 | 0.10 |
| Colorant | 0.39 | 0.07 |
| Perfume | 0.08 | 0.015 |

| **Core** | | |
|---|---|---|
| Nonionic surfactant | 0.28 | 0.05 |
| Sodium carbonate | 1.39 | 0.25 |
| silicate | 2.06 | 0.37 |
| Bicarbonate | 2.06 | 0.37 |
| Sodium citrate dihydrate | 2.06 | 0.37 |
| HEDP | 0.72 | 0.13 |
| Colorant | 0.11 | 0.02 |
| Water | 0.22 | 0.04 |

### Example 5: Scale inhibition performance

The scale inhibition performance was tested according to standard procedure in Miele machines with the 65°C program after 30 cycles. The items are then assessed visually on a score from 0-10, where 0 means a high amount of scale and 10 means no scale. The values for the different groups of dishware are given in Tables 2 and 3.

**Table 2**

| | Glass | China | Plastic | Metal |
|---|---|---|---|---|
| V1 | 2.3 | 3.3 | 3.2 | 3.5 |
| V2 | 4.3 | 4,7 | - | - |
| E1 | 5.1 | 4.7 | 6.3 | 4.5 |

**Table 3**

| | Glass | China | Metal |
|---|---|---|---|
| V2 | 4.8 | 6.0 | 5.0 |
| E2 | 5.3 | 7.0 | 8.5 |

From Table 2 it can be taken that the use of a combination of a sulfopolymer and the P-containing polymer leads to the best performance results, especially on glass. Table 3 shows a comparison between the sulfopolymer and the P-containing polymer. The latter shows better performance on glass, china and metal, with the lower amounts needed being particularly remarkable, as those allow more formulation freedom or reduction of the tablet size.

The scale inhibition performance was also tested with P-containing polymers of different molecular weights. E3 was a polymer as synthesized in Example 1, with Mw 18500 g/mol; E4 was a polymer as synthesized in Example 2, with Mw 30000 g/mol; E5 was a polymer as synthesized in Example 3, with Mw 40000 g/mol. The experiments were conducted as described above in a Miele G1355SC automatic dishwasher with a water hardness of 21°dH, 400 mg/L sodium bicarbonate, with the 50°C turbo dishwashing program and 30 cycles. The results are shown in Table 4.

**Table 4**

| | Glass | China | Plastic | Stainless Steel |
|---|---|---|---|---|
| Sulfopolymer | 5.0 | 4.3 | 8.0 | 7.3 |
| E3 | 5.6 | 4,7 | 8.7 | 7.0 |
| E4 | 5.6 | 4.0 | 7.5 | 6.7 |
| E5 | 4.8 | 4.0 | 7.5 | 6.2 |

## Claims

1. Automatic dishwashing agent, preferably a phosphate-free automatic dishwashing agent, wherein the automatic dishwashing agent comprises 1 to 20 wt %, preferably 2 to 15 wt %, of a phosphate group-containing polymer based on the total weight of the agent.

2. The agent of claim 1, wherein the phosphate group-containing polymer is a copolymer comprising
(1) units (a) derived from acrylic acid;
(2) units (b) derived from an ethylenically unsaturated monomer, preferably derived from one of a methacrylic acid, (meth)acrylamide or vinylbenzene; and
(3) units (c) derived from (i) a precursor monomer unit formed from a phosphate moiety and (ii) an ethylenically unsaturated monomer, preferably derived from one of a (meth)acrylic acid, (meth)acrylamide or vinylbenzene.

3. The agent of claim 2, wherein
(i) the phosphate moiety is represented by the formula R'-O-P(O)(OH)₂ wherein R' is a hydrocarbyl linking group, preferably a -[CH₂]ₙ- group with n ranging from 1 to 5, preferably with n being 2; and/or
(ii) the precursor monomer is represented by the formula CH₂=C(R)-C(O)-O-R'-O-P(O)(OH)₂ where R is H or CH₃, preferably CH₃, and R' is a -[CH₂]ₙ- group with n ranging from 1 to 5, preferably with n being 2

4. The agent of claim 2 or 3, wherein the copolymer comprises
(1) from 50% to 90% by weight, preferably from 55% to 85% by weight, more preferably from 60% to 80%, most preferably from 70% to 80% by weight of units (a), based on the total weight of the copolymer;and/or
(2) from 5% to 45% by weight, preferably from 7% to 40% by weight, more preferably from 10% to 35% by weight, even more preferably from 10% to 30% by weight, and most preferably from 10% to 20% by weight of units (b), based on the total weight of the copolymer; and/or
(3) from 1% to 20% by weight, preferably from 2% to 17% by weight, more preferably from 3% to 15% by weight, most preferably from 5% to 12% by weight of units (c), based on the total weight of the copolymer.

5. The agent of any one of claims 2 to 4, wherein the units (a), (b) and (c) together represent from 75 to 100% by weight of the units of the copolymer.

6. The agent of any one of claims 2 to 5, wherein the copolymer comprises:
(1) from 55 to 85 % by weight, based on the total weight of the copolymer, of units (a) derived from acrylic acid;
(2) from 10% to 30% by weight, based on the total weight of the copolymer, of units (b) derived from an ethylenically unsaturated monomer, preferably methacrylic acid;
(3) from 5% to 15% by weight, based on the total weight of the copolymer, of units (c) derived from a phosphorous acid monomer of formula CH₂=C(R)-C(O)-O-R'-O-P(O)(OH)₂ wherein R is H or CH₃ and R' is a -[CH₂]ₙ- group with n ranging from 1 to 5, preferably with n being 2; and
(4) optionally other units (d), which are different from units (a), (b) and (c),
the total of all the units being equal to 100 wt %.

7. The agent of any one of claims 1 to 6, wherein the phosphate group-containing polymer has a molecular weight Mw of 15000 to 35000 g/mol.

8. The agent of any one of claims 1 to 7, wherein the agent is free of inorganic phosphates.

9. The agent of any one of claims 1 to 8, wherein the agent comprises additional builders selected from the group consisting of carbonates, silicates, citrate, polycarboxylic acids, amino carboxylic acids, phosphonates and sulfopolymers, preferably carbonates, citrate, phosphonates and sulfopolymers.

10. The agent of claim 9, wherein the agent comprises based on the total weight of the automatic dishwashing agent:
(1) 8.0 to 40 wt % (bi)carbonate;
(2) 15 to 30 wt % citrate;
(3) 1.5 to 4 wt % of at least one phosphonate, preferably HEDP; and
(4) 5 to 15 wt % of at least one sulfopolymer.

11. The agent of any one of claims 1 to 10, wherein
(1) the agent comprises at least one nonionic surfactant; and/or
(2) the agent comprises one or more additional active ingredients, preferably selected from the group consisting of of enzymes, bleaching agents, bleach activators and bleach catalysts, corrosion inhibitors, glass corrosion inhibitors, scents and dyes.

12. The agent of any one of claims 1 to 11, wherein
(1) the agent is in solid or liquid form or a combination of solid and liquid forms;
(2) the agent is in solid form selected from the group consisting of powders, granules, exudates and compacted forms, preferably tablets;
(3) the agent is in liquid form based on water and/or organic solvents and in the form of a gel; or
(4) the agent is a single-phase product or multiphase product, preferably a multiphase product in form of a multilayer tablet;

13. Method for the cleaning of dishes in an automatic dishwasher, the method comprising dosing the automatic dishwashing agent according to any one of claims 1 to 12 into the interior of the automatic dishwasher during a dishwashing program that includes a rinse cycle.

14. Method of preventing scale formation on surfaces, preferably glass, plastic, metal or china surfaces, in automatic dishwashing by using an automatic dishwashing agent according to any one of claims 1 to 12.

15. Use of a phosphate group-containing polymer in an automatic dishwashing agent for improving cleaning performance, preferably preventing scale formation, in automatic dishwashing.

## Patentansprüche

1. Maschinelles Geschirrspülmittel, vorzugsweise ein phosphatfreies maschinelles Geschirrspülmittel, wobei das maschinelle Geschirrspülmittel bezogen auf das Gesamtgewicht des Mittels 1 bis 20 Gew.-%, vorzugsweise 2 bis 15 Gew.-%, eines phosphatgruppenhaltigen Polymers umfasst.

2. Mittel nach Anspruch 1, wobei das phosphatgruppenhaltige Polymer ein Copolymer ist, das umfasst:
(1) Einheiten (a), die von Acrylsäure abgeleitet sind;
(2) Einheiten (b), die von einem ethylenisch ungesättigten Monomer abgeleitet sind, die vorzugsweise von einem aus einer Methacrylsäure, (Meth)acrylamid oder Vinylbenzol abgeleitet sind; und
(3) Einheiten (c), die von (i) einem Vorläufermonomerteil, der aus einer Phosphateinheit gebildet ist, und (ii) einem ethylenisch ungesättigten Monomer abgeleitet sind, die vorzugsweise von einem aus einer (Meth)acrylsäure, (Meth)acrylamid oder Vinylbenzol abgeleitet sind.

3. Mittel nach Anspruch 2, wobei:
(i) der Phosphatteil durch die Formel R'-O-P(O)(OH)₂ dargestellt ist, wobei R' eine Hydrocarbylverknüpfungsgruppe ist, vorzugsweise eine Gruppe -[CH₂]ₙ-, wobei n im Bereich von 1 bis 5 liegt, wobei n vorzugsweise 2 ist; und/oder
(ii) das Vorläufermonomer durch die Formel CH₂=C(R)-C(O)-O-R'-O-P(O)(OH)₂ dargestellt ist, wobei R H oder CH₃ ist, vorzugsweise CH₃, und R' eine Gruppe -[CH₂]ₙ- ist, wobei n im Bereich von 1 bis 5 liegt, wobei n vorzugsweise 2 ist.

4. Mittel nach Anspruch 2 oder 3, wobei das Copolymer umfasst:
(1) bezogen auf das Gesamtgewicht des Copolymers 50 Gew.-% bis 90 Gew.-%, vorzugsweise 55 Gew.-% bis 85 Gew.-%, mehr bevorzugt 60 Gew.-% bis 80 Gew.-%, am meisten bevorzugt 70 Gew.-% bis 80 Gew.-% Einheiten (a); und/oder
(2) bezogen auf das Gesamtgewicht des Copolymers 5 Gew.-% bis 45 Gew.-%, vorzugsweise 7 Gew.-% bis 40 Gew.-%, mehr bevorzugt 10 Gew.-% bis 35 Gew.-%, noch mehr bevorzugt 10 Gew.-% bis 30 Gew.-% und am meisten bevorzugt 10 Gew.-% bis 20 Gew.-% Einheiten (b); und/oder
(3) bezogen auf das Gesamtgewicht des Copolymers 1 Gew.-% bis 20 Gew.-%, vorzugsweise 2 Gew.-% bis 17 Gew.-%, mehr bevorzugt 3 Gew.-% bis 15 Gew.-%, am meisten bevorzugt 5 Gew.-% bis 12 Gew.-% Einheiten (c).

5. Mittel nach einem der Ansprüche 2 bis 4, wobei die Einheiten (a), (b) und (c) gemeinsam 75 bis 100 Gew.-% der Einheiten des Copolymers darstellen.

6. Mittel nach einem der Ansprüche 2 bis 5, wobei das Copolymer umfasst:
(1) bezogen auf das Gesamtgewicht des Copolymers 55 bis 85 Gew.-% Einheiten (a), die von Acrylsäure abgeleitet sind;
(2) bezogen auf das Gesamtgewicht des Copolymers 10 Gew.-% bis 30 Gew.-% Einheiten (b), die von einem ethylenisch ungesättigten Monomer, vorzugsweise Methacrylsäure, abgeleitet sind;
(3) bezogen auf das Gesamtgewicht des Copolymers 5 Gew.-% bis 15 Gew.-% Einheiten (c), die von einem Phosphonsäuremonomer der Formel CH₂=C(R)-C(O)-O-R'-O-P(O)(OH)₂ abgeleitet sind, wobei R H oder CH₃ ist und R' eine Gruppe -[CH₂]ₙ- ist, wobei n im Bereich von 1 bis 5 liegt, wobei n vorzugsweise 2 ist; und
(4) optional andere Einheiten (d), die sich von den Einheiten (a), (b) und (c) unterscheiden, wobei alle Einheiten insgesamt 100 Gew.-% ausmachen.

7. Mittel nach einem der Ansprüche 1 bis 6, wobei das phosphatgruppenhaltige Polymer ein Molekulargewicht Mw von 15.000 bis 35.000 g/mol aufweist.

8. Mittel nach einem der Ansprüche 1 bis 7, wobei das Mittel keine anorganischen Phosphate aufweist.

9. Mittel nach einem der Ansprüche 1 bis 8, wobei das Mittel zusätzliche Gerüststoffe umfasst, die aus der Gruppe ausgewählt sind, bestehend aus Carbonaten, Silikaten, Citrat, Polycarbonsäuren, Aminocarbonsäuren, Phosphonaten und Sulfopolymeren, vorzugsweise Carbonaten, Citrat, Phosphonaten und Sulfopolymeren.

10. Mittel nach Anspruch 9, wobei das Mittel bezogen auf das Gesamtmenge des maschinellen Geschirrspülmittels umfasst:
(1) 8,0 bis 40 Gew.-% (Hydrogen-)Carbonat;
(2) 15 bis 30 Gew.-% Citrat;
(3) 1,5 bis 4 Gew.-% zumindest eines Phosphonats, vorzugsweise HEDP; und
(4) 5 bis 15 Gew.-% zumindest eines Sulfopolymers.

11. Mittel nach einem der Ansprüche 1 bis 10, wobei:
(1) das Mittel zumindest ein nichtionisches Tensid umfasst; und/oder
(2) das Mittel ein oder mehrere zusätzliche Wirkstoffe umfasst, die vorzugsweise aus der Gruppe ausgewählt sind, bestehend aus Enzymen, Bleichmitteln, Bleichaktivatoren und Bleichkatalysatoren, Korrosionsinhibitoren, Glaskorrosionsinhibitoren, Duftstoffen und Farbstoffen.

12. Mittel nach einem der Ansprüche 1 bis 11, wobei:
(1) das Mittel in fester oder flüssiger Form oder einer Kombination aus festen und flüssigen Formen vorliegt;
(2) das Mittel in einer festen Form vorliegt, die aus der Gruppe ausgewählt ist, bestehend aus Pulvern, Granulaten, Exudaten und verdichteten Formen, vorzugsweise Tabletten;
(3) das Mittel in einer flüssigen Form, die auf Wasser und/oder organischen Lösungsmittel basiert, und in Form eines Gels vorliegt; oder
(4) das Mittel ein einphasiges Produkt oder ein mehrphasiges Produkt ist, vorzugsweise ein mehrphasiges Produkt in Form einer mehrschichtigen Tablette;

13. Verfahren zum Reinigen von Geschirr in einer Geschirrspülmaschine, wobei das Verfahren das Dosieren des maschinellen Geschirrspülmittels nach einem der Ansprüche 1 bis 12 in das Innere der Geschirrspülmaschine während eines Geschirrspülprogramms umfasst, das einen Klarspülzyklus umfasst.

14. Verfahren zum Verhindern der Bildung von Ablagerungen auf Oberflächen, vorzugsweise Glas-, Kunststoff-, Metall- oder Porzellanoberflächen, beim Geschirrspülen in einer Geschirrspülmaschine unter Verwendung eines maschinellen Geschirrspülmittels nach einem der Ansprüche 1 bis 12.

15. Verwendung eines phosphatgruppenhaltigen Polymers in einem maschinellen Geschirrspülmittel zum Verbessern der Reinigungsleistung, vorzugsweise zum Verhindern der Bildung von Ablagerungen, beim maschinellen Geschirrspülen.

## Revendications

1. Agent de lavage automatique de vaisselle, de préférence un agent de lavage automatique de vaisselle exempt de phosphates, l'agent de lavage automatique de vaisselle comprenant de 1 à 20 % en poids, de préférence de 2 à 15 % en poids, d'un polymère contenant un groupe phosphate rapporté au poids total de l'agent.

2. Agent selon la revendication 1, dans lequel le polymère contenant un groupe phosphate est un copolymère comprenant
(1) des unités (a) dérivées de l'acide acrylique ;
(2) des unités (b) dérivées d'un monomère à insaturation éthylénique, de préférence dérivées d'un composé parmi un acide méthacrylique, un méthacrylamide ou un vinylbenzène et
(3) des unités (c) dérivées (i) d'une unité monomère précurseur formé à partir d'un fragment phosphate et (ii) d'un monomère à insaturation éthylénique, de préférence dérivées d'un composé parmi un acide méthacrylique, un méthacrylamide ou un vinylbenzène.

3. Agent selon la revendication 2, dans lequel
(i) le fragment phosphate est représenté par la formule R'-O-P(O)(OH)₂ dans laquelle R' est un groupe de liaison hydrocarbyle, de préférence un groupe -[CH₂]ₙ- où n vaut entre 1 et 5, de préférence n valant 2 ; et/ou
(ii) le monomère précurseur est représenté par la formule CH₂=C(R)-C(O)-O-R'-O-P(O)(OH)₂ dans laquelle R représente H ou CH₃, de préférence CH₃, et R' est un groupe -[CH₂]ₙ- où n vaut entre 1 et 5, de préférence n valant 2.

4. Agent selon la revendication 2 ou 3, dans lequel le copolymère comprend
(1) entre 50 % et 90 % en poids, de préférence entre 55 % et 85 % en poids, plus préférablement entre 60 % et 80 %, le plus préférablement entre 70 % et 80 % en poids d'unités (a), rapporté au poids total du copolymère ; et/ou
(2) entre 5 % et 45 % en poids, de préférence entre 7 % et 40 % en poids, plus préférablement entre 10 % et 35 % en poids, encore plus préférablement entre 10 % et 30 % en poids et le plus préférablement entre 10 % et 20 % en poids d'unités (b), rapporté au poids total du copolymère ; et/ou
(3) entre 1 % et 20 % en poids, de préférence entre 2 % et 17 % en poids, plus préférablement entre 3 % et 15 % en poids, le plus préférablement entre 5 % et 12 % en poids d'unités (c), rapporté au poids total du copolymère.

5. Agent selon l'une quelconque des revendications 2 à 4, dans lequel les unités (a), (b) et (c) représentent ensemble de 75 % à 100 % en poids des unités du copolymère.

6. Agent selon l'une quelconque des revendications 2 à 5, dans lequel le copolymère comprend :
(1) entre 55 % et 85 % en poids, rapporté au poids total du copolymère, d'unités (a) dérivées de l'acide acrylique ;
(2) entre 10 % et 30 % en poids, rapporté au poids total du copolymère, d'unités (b) dérivées d'un monomère à insaturation éthylénique, de préférence l'acide méthacrylique ;
(3) entre 5 % et 15 % en poids, rapporté au poids total du copolymère d'unités (c) dérivées d'un monomère d'acide phosphoreux de formule CH₂=C(R)-C(O)-O-R'-O-P(O)(OH)₂ dans laquelle R représente H ou CH₃ et R' est un groupe -[CH₂]ₙ- où n vaut entre 1 et 5, de préférence n valant 2 ; et
(4) éventuellement d'autres unités (d), qui sont différentes des unités (a), (b) et (c), le total de toutes les unités étant égal à 100 % en poids.

7. Agent selon l'une quelconque des revendications 1 à 6, dans lequel le polymère contenant un groupe phosphate à une masse moléculaire Mw comprise entre 15 000 et 35 000 g/mol.

8. Agent selon l'une quelconque des revendications 1 à 7, dans lequel l'agent est exempt de phosphates inorganiques.

9. Agent selon l'une quelconque des revendications 1 à 8, dans lequel l'agent comprend des adjuvants supplémentaires choisis dans l'ensemble constitué des carbonates, des silicates, du citrate, des polyacides carboxyliques, des acides amino carboxyliques, des phosphonates et des sulfopolymères, de préférence des carbonates, du citrate, des phosphonates et des sulfopolymères.

10. Agent selon la revendication 9, dans lequel l'agent comprend rapporté au poids total de l'agent automatique de lavage de vaisselle :
(1) entre 8,0 et 40 % en poids de (bi)carbonate ;
(2) entre 15 et 30 % en poids de citrate ;
(3) entre 1,5 et 4 % en poids d'au moins un phosphonate, de préférence l'HEDP ; et
(4) entre 5 et 15 % en poids d'au moins un sulfopolymère.

11. Agent selon l'une quelconque des revendications 1 à 10, dans lequel
(1) l'agent comprend au moins un tensioactif non ionique ; et/ou
(2) l'agent comprend au moins un ingrédient actif supplémentaire, de préférence choisi dans l'ensemble constitué d'enzymes, d'agents de blanchiment, d'activateurs de blanchiment et de catalyseurs de blanchiment, d'inhibiteurs de corrosion, d'inhibiteurs de corrosion du verre, de parfums et de colorants.

12. Agent selon l'une quelconque des revendications 1 à 11, dans lequel
(1) l'agent est sous une forme solide ou liquide ou dans une combinaison de formes solide et liquide ;
(2) l'agent est sous une forme solide choisie dans l'ensemble constitué des formes en poudres, en granules, en exsudats et compactées, de préférence des comprimés ;
(3) l'agent est sous une forme liquide à base d'eau et/ou de solvants organiques et est sous la forme d'un gel ; ou
(4) l'agent est un produit à phase unique ou un produit multiphasique, de préférence un produit multiphasique sous la forme d'un comprimé multicouche.

13. Procédé de nettoyage de plats dans un lave-vaisselle automatique, le procédé comprenant le dosage de l'agent automatique de lavage de vaisselle selon l'une quelconque des revendications 1 à 12 à l'intérieur du lave-vaisselle automatique pendant un programme de lave-vaisselle qui inclut un cycle de rinçage.

14. Procédé de prévention de formation de tartre sur des surfaces, de préférence sur des surfaces en verre, en plastique, en métal ou en porcelaine, lors du lavage de vaisselle automatique au moyen d'un agent automatique de lavage de vaisselle selon l'une quelconque des revendications 1 à 12.

15. Utilisation d'un polymère contenant un groupe phosphate dans un agent de lavage automatique de vaisselle destiné à l'amélioration de la performance du nettoyage, de préférence destiné à la prévention de la formation de tartre, lors du lavage automatique de vaisselle.
